(19) Europäisches Patentamt
European Patent Office
Office européen des brevets

(11) **EP 0 966 679 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(21) Anmeldenummer: **98908110.4**

(22) Anmeldetag: **25.02.1998**

(51) Int Cl.⁷: $G01N\ 30/60$, $B01D\ 15/08$

(86) Internationale Anmeldenummer:
**PCT/EP1998/001052**

(87) Internationale Veröffentlichungsnummer:
**WO 1998/040734 (17.09.1998 Gazette 1998/37)**

(54) **ENDSTÜCK FÜR EINE CHROMATOGRAPHISCHE SÄULE**

END PIECE FOR A CHROMATOGRAPHIC COLUMN

PIECE TERMINALE POUR COLONNE CHROMATOGRAPHIQUE

(84) Benannte Vertragsstaaten:
**DE FR GB**

(30) Priorität: **12.03.1997 DE 19710117**

(43) Veröffentlichungstag der Anmeldung:
**29.12.1999 Patentblatt 1999/52**

(73) Patentinhaber: **MERCK PATENT GmbH
64271 Darmstadt (DE)**

(72) Erfinder:
• **SPURK, Joseph, H.
D-64732 Bad König (DE)**
• **PELZ, Peter, F.
D-55116 Mainz (DE)**
• **MÜLLER, Hans, D., J.
D-64839 Münster (DE)**
• **DELP, Axel
D-64407 Fränkisch-Crumbach (DE)**
• **HARDERS, Hans-Dieter
D-64287 Darmstadt (DE)**

(56) Entgegenhaltungen:
WO-A-95/14220     US-A- 4 354 932
US-A- 4 966 696

**Beschreibung**

Die Erfindung betrifft ein Endstück für chromatographische Säulen, insbesondere für Säulen für die HPLC.

Im Auslaufteil von chromatographischen Säulen, dem Säulenendstück, verringert sich der durchströmte Querschnitt um mehrere Größenordnungen. Damit einher geht eine entsprechende Änderung der Fließgeschwindigkeit des Säuleneluats, wobei zusätzliche radiale Strömungskomponenten auftreten. Somit entsteht das Problem, daß im Säulenbett aufgetrennte chromatographische Banden nicht getrennt eluiert werden, da durch Einflüsse am Säulenauslauf Vermischungseffekte auftreten. Wegen der besseren Trenneffekte, die mit der Hochleistungsflüssigkeitschromatographie (HPLC) erreichbar sind, ist die Problematik in der HPLC besonders ausgeprägt. In der präparativen HPLC, wo Säulendurchmesser von mehr als fünf Zentimetern üblich sind, wird diese Problematik nochmals verstärkt, da die Verbindungsleitungen im Verhältnis zu den Säulendurchmessern besonders klein sind.

In Standardwerken für die HPLC. wie z.B. im Handbuch der HPLC (Herausgeber K.K. Unger; 1994, GIT-Verlag), werden bekannte Problemlösungen dargestellt. Üblich ist es beispielsweise, unter einer Fritte (bed support frit), die das Sorbensbett stützt, einen zylindrischen Hohlraum anzuordnen, in dem das Eluat radial zum Säulenauslauf strömen kann. In Abhängigkeit der Position eines Volumenelementes bezüglich des Querschnittes der Säule (d.h. der Entfernung dieses Elementes von der Säulenachse) benötigt dieses Flüssigkeitselement unterschiedliche Zeit beim Durchströmen des Säulenendstückes. Diese Unterschiede führen zu der erwähnten Verbreiterung der Eluatbanden, und damit zur Verschlechterung der Trennleistung. Diese Verschlechterung der Trennleistung wird von der herrschenden Meinung als Folge des Leervolumens (void volume) verstanden. Deswegen wird als Abhilfe die Verwendung einer Nullvolumenendplatte (zero void volume endplate) vorgeschlagen, wie es beispielsweise aus der Abbildung auf Seite 62 des genannten Handbuches ersichtlich ist. Diese Endplatte enthält im zentralen Bereich radiale Vertiefungen, die sich nicht über den gesamten Querschnitt erstrecken. Die notwendige Querströmung muß deswegen im wesentlichen durch die Verteilerfritte (dispenser frit) erfolgen; diese besitzt die Form eines flachen Zylinders. Bei dieser Ausführungsform bleibt die beschriebene Problematik der unterschiedlichen Laufzeiten der Volumenelemente somit ungelöst. In EP 0 106 746 ist in Abbildung 4 schematisch ein Säulenendstück dargestellt, das einen trichterförmigen Auslauf besitzt. In J. Chromatogr. Library ( Elsevier (1975) Band 3; Liquid Column Chromatography) sind auf Seite 105 verschiedene Chromatographiesäulen schematisch dargestellt. Dabei finden sich auch Säulenendstücke mit gekrümmten Profil. Auf die Problematik der Strömungsverhältnisse beim Übergang zwischen Säule und Auslaufrohr wird jedoch in diesen Druckschriften nicht eingegegangen. Bei den hydrodynamischen Modellrechnungen, die im folgenden näher beschrieben wurden, wurde ein weiteres Phänomen deutlich, das zur Bandenverbreiterung beiträgt: Bei diesen Rechnungen wurde gefunden, daß das Druckprofil nicht eben ist, so daß in Abhängigkeit vom Abstand der Säulenachse im Säulenendstück ein unterschiedlicher Druckanstieg erfolgt. Dieses verzerrte Druckprofil wirkt auf die Strömung in der Säulenpackung zurück.

Die US 4 966 696 offenbart eine chromatographische Säule entsprechend dem Oberbegriff des Anspruchs 1 der vorliegenden Erfindung.

Aufgabe der Erfindung ist es, die Gestaltung von Endstücken von chromatographischen Säulen zu verbessern, damit die Durchmischung von Grenzzonen und damit einhergehende Bandenverbreiterung beim Durchströmen des Eluates durch den Säulenauslauf verringert wird, wobei insbesondere auch eine Rückwirkung eines verzerrten, d.h. nicht ebenen, Druckprofiles auf das Strömungsverhalten in der Säulenpackung vermieden werden soll.

Die Aufgabe wird durch die Bereitstellung von Säulenendstücken gelöst, deren Querschnitt so gestaltet ist, daß Trennflächen zwischen eluierten Banden parallel den Säulenauslauf passieren, ohne übermäßig verzerrt zu werden. Dazu wird ein Säulenendstück für eine chromatographische Säule bereitgestellt, das einen Querschnitt aufweist, der von einem Kegel abgeleitet ist, wobei die Seitenfläche bevorzugterweise statt einer geraden eine gekrümmte Kontur aufweist. Die gekrümmte Kontur ergibt sich auf der Grundlage einer hydrodynamischen Analyse, wobei je nach den gewählten Randbedingungen das Gleichungssystem eine Parabelgleichung, d.h. eine konkav gekrümmte Kontur, oder die Gleichung einer Exponentialfunktion, d.h. eine konvex gekrümmte Kontur, ergibt. Es wurde gefunden, daß auch Mischformen mit sigmoider Krümmung, die von einem konkaven Teil in einen konvexen Teil übergeht, vorteilhaft sind. Um die erwähnte Rückwirkung des verzerrten Druckprofiles zu beseitigen, wird erfindungsgemäß zwischen dem Sorbensbett der chromatographischen Säule und ihrem Auslaufteil eine Druckabkoppelung vorgesehen. Dazu wird die Abflußfritte (2) so gestaltet, daß der Druckabfall pro Längeneinheit in der Fritte mindestens doppelt so groß ist wie in der Sorbenspackung. Maßnahmen, die es erlauben, den Druckabfall in einer Fritte zu vergrößern, sind dem Fachmann bekannt. Dazu gehört beispielsweise, die Porosität der Fritte zu verringern. Während nach herrschender Meinung der Strömungswiderstand in einer Abschlußfritte möglichst gering gehalten werden soll, damit der Druckabfall nicht unnötigerweise erhöht wird, lehrt die vorliegende Erfindung, daß dieser Druckabfall in der Abschlußfritte erhöht werden soll, damit die Trennleistung der chromatographischen Säule erhöht wird.

Bei Verwendung einer Abschlußfritte, die eine starke Druckabkoppelung bewirkt, wird auch mit einer kegelförmigen Kontur eine Grenzschicht weitgehend unverzerrt erhalten. Dazu wird zwischen dem Sorbensbett der chromatographischen Säule und ihrem Auslaufteil eine Druckabkoppelung vorgesehen, wobei die Abflußfritte (2) so gestaltet wird, daß der Druckabfall pro Längeneinheit in der Fritte mindestens doppelt so groß ist wie in der Sorbenspakkung.

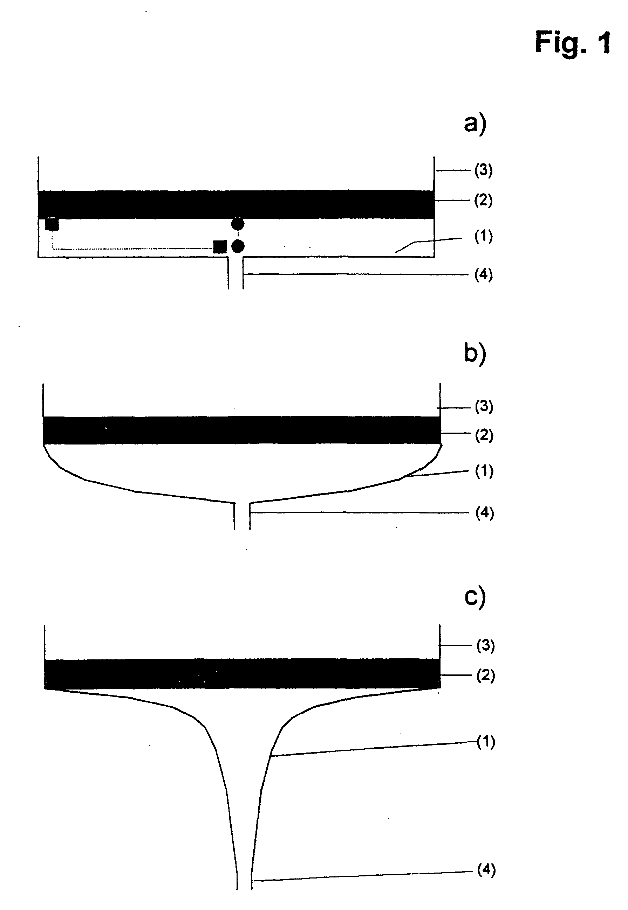

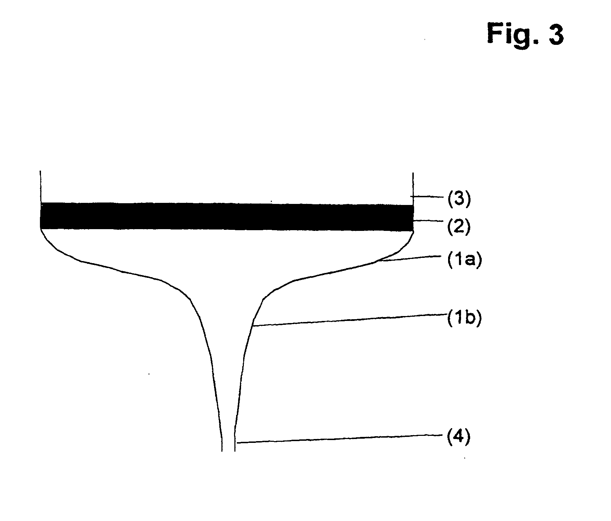

Gegenstand der Erfindung ist eine chromatographische Säule Umfassend ein Sorbensbett und ein Säulenendstück, durch das Elutionsmittel strömt das Säulenendstück umfassend ein Bodenteil (Abbildung 1b, 1c und 3;1, 1a, 1b), ein Ablaufrohr, dessen Innenprofil mit (4) gekennzeichnet ist, und eine Fritte (2), wobei das Bodenteil eine im wesentlichen trichterförmige Kontur aufweist, und wobei besagte Fritte beim Durchströmen des Elutionsmittels einen Druckabfall pro Längeneinheit erzeugt, der mindestens doppelt so groß ist, wie der Druckabfall pro Längeneinheit, der in der Sorbenspackung beim Durchströmen des Elutionsmittels entsteht. In bevorzugten Ausführungsformen weist das Bodenteil einen gekrümmten Bereich (Abbildung 1b, 1c und 3; 1, 1a, 1b) auf. Diese Krümmung kann konkav, konvex oder sigmoidal geformt sein.

Abbildung 1 stellt im Längsschnitt durch ein Säulenendstück verschiedene Varianten von Abschlußprofilen (1) dar: Teilabbildung 1a stellt einen Längsschnitt durch ein Säulenendstück entsprechend dem Stand der Technik dar, das ein Abschlußprofil mit einem rechteckigen Profil aufweist. Abbildung 1b zeigt ein erfindungsgemäßes Auslaufprofil mit paraboloider, d.h. konkav gekrümmter Kontur. Teilabbildung 1c zeigt ein erfindungsgemäßes Auslaufprofil mit exponentiell gekrümmter, d.h. konvex gekrümmter Kontur. Dargestellt sind außer den Innenkonturen der Abschlußprofile die Abschlußfritte (2) des Sorbensbettes, das Innenprofil (3) der Säule und das Innenprofil (4) des Auslaufrohres.

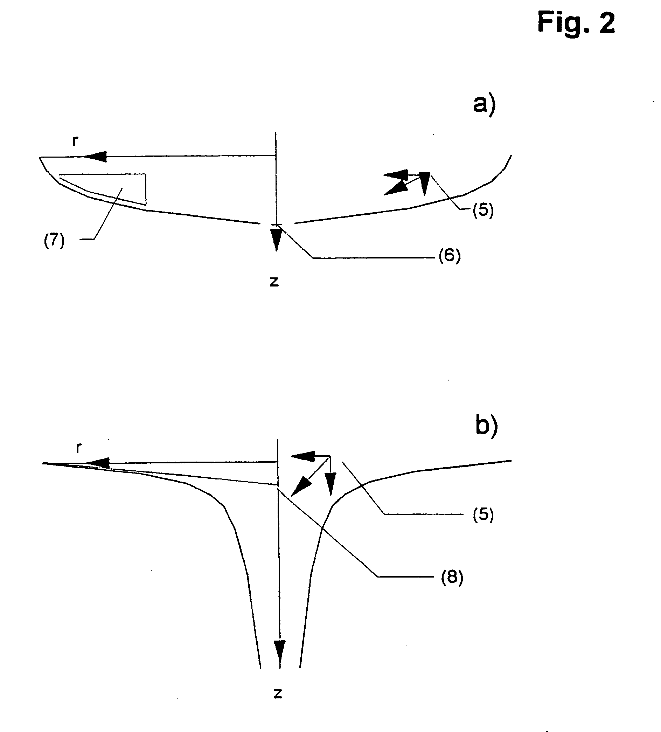

Die Abbildung 2 stellt Längsschnitte durch Säulenendstücke dar, deren Abschlußprofile entsprechend von bevorzugten Ausführungsformen eine gekrümmte Kontur aufweisen. Es sind zusätzlich die für die Herleitung der Krümmungsparameter notwendigen Größen eingetragen. Das in Teilabbildung 2a dargestellte Säulenendstück weist eine paraboloide Kontur des Abschlußprofiles auf. Abbildung 2b stellt einen Längsschnitt durch eine weitere Ausführungsform eines erfindungsgemäßen Säulenendstückes dar, dessen Abschlußprofil eine exponentiell gekrümmte Kontur aufweist.

Abbildung 3 stellt einen Längsschnitt durch ein Säulenendstück dar, dessen Abschlußprofil eine sigmoidal gekrümmte Kontur aufweist: In dem Teil, der dem Sorbensbett zugewandt ist, ist die Krümmung zunächst konkav (1a); die Krümmung geht in eine konvexe Form (1b) über. Dargestellt sind außer der Innenkontur des Abschlußprofils die Abschlußfritte (2) des Sorbensbettes, das Innenprofil (3) der Säule und das Innenprofil (4) des Auslaufrohres.

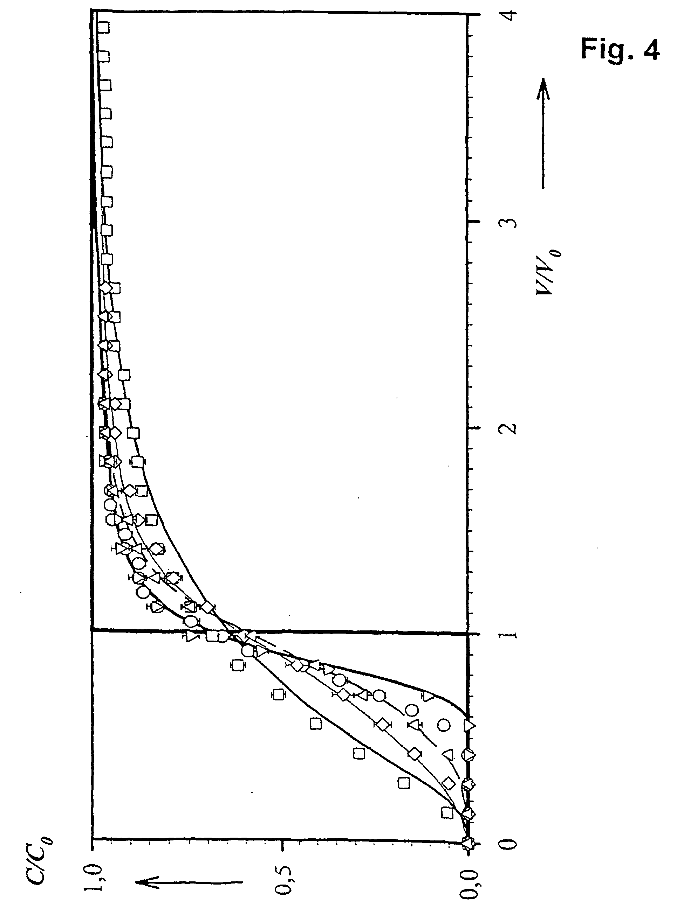

Abbildung 4 veranschaulicht Konzentrationsänderungen, wie sie beim Durchgang einer Grenzschicht durch ein Säulenendstück entstehen. Aufgetragen ist der Quotient Konzentration/maximalen Konzentration ($C/C_0$) gegen den Quotienten eluiertes VolumenNolumen des Säulenendstückes ($V/V_0$). Verglichen wird das Durchströmen eines Endstückes mit rechteckigem Abschlußprofil entsprechend dem Stand der Technik (Symbol □) mit verschiedenen Ausführungsformen von erfindungsgemäßen gekrümmten Abschlußprofilen:

◊: paraboloides Abschlußprofil
▽: exponentiell gekrümmtes Abschlußprofil
○: sigmoidal gekrümmtes Abschlußprofil
△: kegelförmiges Abschlußprofil

Bei der Berechnung wurde das Volumen des jeweiligen Endstückes jeweils gleichgroß festgelegt.

Die Fließvorgänge im Auslaufteil einer chromatographischen Säule, wie sie im Stand der Technik bekannt ist, lassen sich anhand der Abbildung 1 a beschreiben. Dargestellt sind zwei Volumenelemente A (●) und B (■), sowie deren Weg während der Elution. Das Volumenelement A befindet sich nahe der Längsachse der chromatographischen Säule, während das Volumenelement B sich zunächst an der Peripherie der Säule befindet und erst im weiteren Strömungsverlauf sich im Auslaufsbereich der Längsachse des Auslaufteiles nähert. Es ist unmittelbar ersichtlich, daß beide Volumenelemente unterschiedliche Wege zurückzulegen haben. Radial benachbarte Volumenelemente, die beim Einströmen in das Auslaufteil die gleiche axiale Position aufweisen, werden nach dem Durchströmen des Auslaufteiles unterschiedliche axiale Positionen aufweisen. Dies führt dazu, daß das Volumenelement B verzögert in den Auslaufsbereich eintritt, wodurch ein ursprünglich vorhandener Konzentrationsübergang verbreitert wird.

Dieses Problem wird erfindungsgemäß dadurch gelöst, daß man den Auslaufteil so gestaltet, daß parallele ebene Trennflächen der Flüssigkeitssäule auch beim Durchströmen des Auslaufteiles eben und parallel bleiben. Auf dieser Grundlage wurde gefunden, daß die Bandenverbreiterung verringert werden kann, wenn das Bodenteil im Längsschnitt statt der geradlinig-rechteckigen Kontur (siehe Abbildung 1a) eine gekrümmte Kontur (siehe Abbildung 1b, beziehungsweise Abbildung 1c) aufweist. Entsprechend den gewählten Randbedingungen ergibt sich dabei eine konkave (siehe Abbildung 1b) beziehungsweise eine konvexe (siehe Abbildung 1c) Krümmung des Bodenteiles. Eine sigmoidal gekrümmte Kontur, bei der die Krümmung von einem konkaven Teil in einen konvexen Teil übergeht, erwies sich ebenfalls als vorteilhaft. Die unterschiedlichen Randbedingungen werden im folgenden jeweils dargestellt.

Eine bevorzugte konkave Kurvenform, die einer parabolischen Gleichung folgt, ist in den folgenden Abschnitten offenbart. Durch die erfindungsgemäße Ausformung des Bodenteiles werden auf der Säule getrennte Substanzen beim Verlassen der Säule möglichst gleichmäßig eluiert und eine zusätzliche Bandenverbreiterung weitgehend vermieden. Wie bereits anschaulich ersichtlich, ist dazu ein rechteckiges Profil ungeeignet.

Das vollständige Abschlußprofil entsteht durch Drehung der Kurve, oder falls die verwendete Kurve nicht symmetrisch zur y-Achse ist, eines Kurvenastes, um die Längsachse der Säule. Diese Kurve, beziehungsweise dieser Kurvenast stellt die Kontur des Abschlußprofiles dar. Bekanntermaßen besitzt eine parabolische Gleichung folgende Form:

$$y = a_0 + a_1 x^1 + a_2 x^2 + a_3 x^3 + ... + a_n x^n$$

Bevorzugt sind Parabeln, die eine symmetrische Kurvenform beschreiben, d.h. die Konstanten $a_n$ mit ungeraden Indices sind gleich Null. Insbesondere bevorzugt ist die symmetrische Parabel zweiter Ordnung mit der Gleichung $y = a_0 + a_2 x^2$.

Geht man bei einer Modellbetrachtung für eine weiter optimierte Gestaltung des Bodenteiles aus, so sollten die Zeitlinien an zwei gegebenen Querschnitten des Abflusses eben und parallel gehalten werden. Weitere Annahmen und Randbedingungen, die es erlauben, zusammen mit der Kontinuitätsgleichung eine optimale Konturkurve des Auslaufbereiches zu ermitteln, sind im folgenden Abschnitt zusammengestellt. Die benutzten Bezeichnungen sind in Abbildung 2a wiedergegeben, aus dieser Abbildung gehen auch die weiteren Zusammenhänge hervor. In Abbildung 2a bedeuten: (5) die Geschwindigkeitsvektoren $U_r$ (in Richtung r), $U_z$ (in Richtung z) und die Resultierende U; (6) die Höhe h des Auslaufteiles; die Fläche (7) kennzeichnet den Querschnitt durch die Kontrollflächen A1, A2 und A3, wobei A1 sich in Richtung r erstreckt, A2 in Richtung z und A3 entlang der Kontur des Auslaufteiles.

- Vertikale Geschwindigkeit $U_z$ konstant, d.h. ein ebenes Fließprofil soll eben bleiben.
- Liniensenke auf der Achse. Die theoretische Abbildung hat keine Abflußbohrung als solche. Es wird das ideale Profil und Geschwindigkeitsfeld für eine Liniensenke auf der Achse vorgelegt. Ist die Kurve "flach" genug (also die Höhe viel kleiner als der Radius), ist dies eine vertretbare Vereinfachung.
- Für gegebene z = konst., $\dfrac{U_r}{U_z} = \dfrac{dr}{dz}$, d.h. die Flüssigkeit fließt tangential zur Kurve.
- Größter Radius $r_0$ bei z = 0.

Gesucht ist dann die Kurvengleichung z = f(r), die durch die Anwendung der Kontinuitätsgleichung auf das Kontrollvolumen erhalten wird:

$$\iint_{A1} \rho \vec{U} \cdot \vec{n}\,ds + \iint_{A2} \rho \vec{U} \cdot \vec{n}\,ds + \iint_{A3} \rho \vec{U} \cdot \vec{n}\,ds = 0 \quad \text{mit } \rho = \text{konst.}$$

Kontrollfläche A1

$$\iint_{A1} \vec{U} \cdot \vec{n}\,ds = \int_{r}^{r_0} \int_{0}^{2\pi} - U_z r\, d\varphi\, dr = -\pi U_z (r_0^2 - r^2)$$

Kontrollfläche A2

$$\iint_{A2} \vec{U} \cdot \vec{n}\,ds = \int_{0}^{z} \int_{0}^{2\pi} - U_r r\, d\varphi\, dz = 2\pi U_z \frac{dr}{dz} rz$$

Kontrollfläche A3

$$\iint_{A3} \vec{u} \cdot \vec{n}\,ds = \quad 0, \text{ da A3 entlang der Wand läuft.}$$

Durch Einsetzen in der Kontinuitätsgleichung ergibt sich:

$$- \pi U_z(r_o^2 - r^2) - 2\pi U z \frac{dr}{dz} rz = 0$$

$$\Rightarrow - 2rz \frac{dr}{dz} = r_o^2 - r^2$$

$$\Rightarrow - f \frac{2r}{r_o^2 - r^2} dr = f \frac{1}{z} dz$$

$$\Rightarrow \ln(r_o^2 - r^2) = \ln z + c$$

$$z = \tilde{c}\,(r_o^2 - r^2)$$

Die gesuchte Kurve folgt also einer parabolischen Gleichung. Die Konstante wird folgendermaßen bestimmt:

$$z(r = r_o) = 0$$

$$z(r = 0) = h$$

wobei hier gemerkt wird, daß für $r \rightarrow 0$, $U_r \rightarrow \infty$

Diese Unstimmigkeit des Modells ist für praktische Ausführungsformen ohne Bedeutung, da sich die Abflußbohrung an der Stelle befindet, die die Unstimmigkeit aufweist. Andererseits vereinfachen die genannten Randbedingungen und Annahmen das mathematische Modell erheblich.

Einsetzen in die parabolische Gleichung liefert $h = \tilde{c} r_o^2$, also

$$\tilde{c} = \frac{h}{r_o^2}$$

Daraus folgt für die Kurvengleichung:

$$z = h \left( 1 - \frac{r^2}{r_o^2} \right)$$

Für die Bestimmung der Höhe h können beispielsweise die folgenden Bedingungen verwendet werden:

* Abflußradius $r_e = 3{,}5$ mm (Innenradius des Abflussrohres),

* Größter Radius $r_o$ = 50 mm (Innenradius der Trennsäule),
* Maximale Geschwindigkeit $|\vec{U}|$ beträgt $U_{rohr}$, d.h. die Geschwindigkeit der Flüssigkeiten in der Rohrleitung am Ausgang der Säule.

Das Verhältnis der Strömungsgeschwindigkeiten im Säulenrohr $U_z(r_0)$ und in der Rohrleitung $U_{rohr}$ ergibt sich in bekannter Weise aus den jeweiligen Querschnitten:

$$\text{Mit } \frac{d_z}{d_r} = -\frac{U_z}{U_r} \text{ und } z = h\left(1 - \frac{r^2}{r_o^2}\right) \text{ folgt}$$

$$-\frac{U_z}{U_r} = \frac{2rh}{r_o^2}$$

Aus dem Geschwindigkeitsdreieck folgt

$$U_r = \sqrt{U^2 - U_z^2}$$

Damit wird

$$h = \frac{r_0^2 U_z}{2r_e\sqrt{U^2 - U_z^2}}$$

Für die obigen Werte ergibt sich h ≈ 1,75 mm. Für die numerische Modellrechnung wurde h = 3 mm gesetzt. Es resultiert die Kurvengleichung:

$$z = 3\left(1 - \frac{r^2}{2500}\right)$$

In dieser Formel sind z und r in mm anzugeben.

Eine andere, d.h. konvexe Kurvenform, die der Gleichung einer Exponentialfunktion folgt, ist in den folgenden Abschnitten offenbart. Auch durch diese erfindungsgemäße Ausformung des Bodenteiles werden auf der Säule getrennte Substanzen beim Verlassen der Säule möglichst gleichmäßig eluiert und eine zusätzliche Bandenverbreiterung weitgehend vermieden. Wie bereits anschaulich ersichtlich, ist dazu ein rechteckiges Profil ungeeignet. Die folgenden Erläuterungen beziehen sich auf Abbildung 2a; darin bedeuten: (5) die Geschwindigkeitsvektoren $U_r$ (in Richtung r), $U_z$ (in Richtung z) und die Resultierende U; (8) kennzeichnet die Lage der Koordinate $z$.

Die Randbedingungen für die Herleitung dieser Kurvenform sind folgende:

Um eine erfindungsgemäße Kontur zu erhalten, ist zu fordern, daß die axiale Geschwindigkeitskomponente $u_z$ des Geschwindigkeitsfeldes

$$\vec{u}(r, z) = u_z\vec{e}_z + u_r\vec{e}_r$$

keine Funktion der radialen Koordinate r ist. Grundsätzlich ist zu fordern, daß die Masse eines Flüssigkeitsteils erhalten bleibt.

Ein Geschwindigkeitsfeld, das beide Forderungen erfüllt, ist:

$$\vec{u}(r, z) = W \exp(2\tfrac{z}{\hat{z}})[\vec{e}_z - \tfrac{r}{\hat{z}} \, \vec{e}_r].$$

Die Bahnlinien der Flüssigkeitsteilchen sind hier logarithmische Kurven. Ein Flüssigkeitsteilchen, das sich zur Zeit Null an der Stelle z=0 und r=R, befand, folgt der Bahn

$$r(z) = R * \exp\left(\frac{z}{\hat{z}}\right)$$

Daraus resultiert eine bevorzugte Kontur des Bodenteils, die einer Exponentialkurve folgt,

$$r(z) = \hat{R} * \exp\left(\frac{z}{\hat{z}}\right)$$

wobei $\hat{R}$ der Säulenradius ist.

Da in einem beliebigen Querschnitt des Bodenteils alle Flüssigkeitsteilchen die gleiche axiale Geschwindigkeitskomponente haben, wird die Front des chromatographischen Bandes eben bleiben und die Durchbruchkurve hat den in Figur 4 dargestellten Verlauf.

Eine weitere Variante eines erfindungsgemäßem Endstückes ist in Abbildung 3 dargestellt: Im oberen, dem Sorbensbett zugewandten Teil ist die Krümmung konkav, z.B. parabolisch (1a), gekrümmt. Die Krümmung geht dann in einen konvexen, z.B. exponentiellen Kurvenverlauf (1b) über.

Beispielhaft lassen sich die Konturen für die verschiedenen Ausführungsformen der Erfindung durch die folgenden Gleichungen darstellen:

a) parabolische, d.h. konkave Kontur:

$$\frac{R(z)}{a} = \sqrt{1 - \frac{z}{2h}}$$

b) exponentielle, d.h. konvexe Kontur:

$$\frac{R(z)}{a} = \exp\left(-\frac{z}{2h}\right)$$

c) sigmoidale, d.h. konkav-konvexe Kontur:

$$\frac{R(z)}{a} = \sqrt{1 - \frac{z}{1{,}6}} \qquad \text{für } 0 \leq \frac{z}{1{,}6} \leq 1/2$$

beziehungsweise

$$\frac{R(z)}{a} = \sqrt{\frac{e}{2}} \exp\left(\frac{-z}{1{,}6}\right) \qquad \text{für } \frac{z}{1{,}6} > 1/2$$

d) kegelförmige Kontur:

$$\frac{R(z)}{a} = \left(1 - \frac{z}{3h}\right)$$

Darin ist z die Koordinate längs der Achse des Säulenendstückes in Richtung des Eluentenstromes, r die Koordinate in radialer Richtung. Die Größe a bedeutet den Säuleninnendurchmesser, h bedeutet die Höhe des Säulenendstückes (z-Richtung). Die auf a bezogenen Trichterradien R(z)/a ergebens sich aus den oben genannten Formeln.

Wie aus den Herleitungen der gekrümmten Trichterkonturen ersichtlich, resultieren die genannten Funktionsgleichungen für diese Trichterkonturen aus den gewählten Randbedingungen. Da sich Funktionsgleichungen beispielsweise durch Reihenentwicklung, wie der Taylor-Reihe, näherungsweise darstellen lassen, ist es dem Fachmann selbstverständlich, daß auch solche angenäherten Funktionen die der Erfindung zugrundeliegende Aufgabe zu lösen vermögen.

Um die erwähnte Rückwirkung des verzerrten Druckprofiles zu beseitigen, wird erfindungsgemäß zwischen dem Sorbensbett der chromatographischen Säule und ihrem Auslaufteil eine Druckabkoppelung vorgesehen. Dazu wird die Abflußfritte (2) so gestaltet, daß der Druckabfall pro Längeneinheit in der Fritte mindestens doppelt so groß ist wie in der Sorbenspackung. Maßnahmen, die es erlauben, den Druckabfall in einer Fritte zu vergrößern, sind dem Fachmann bekannt. Dazu gehört beispielsweise, die Porosität der Fritte zu verringern. Da die verschiedenen Auslaufprofile, wie sie nach der Lehre der vorliegenden Erfindung festgelegt werden können, in unterschiedlicher Weise das Druckprofil verzerren, ist es bei einigen dieser Ausführungsformen möglich, die erfindungsgemäß vorgesehene Druckabkoppelung sehr niedrig zu halten.

Werden das Ausströmverhalten der in den Abbildungen 1a, 1b und 1c, sowie 3 gezeigten Formgebungen des Abschlußprofiles in einer Modellrechnung dargestellt, so ergibt sich das in Abbildung 4 gezeigte Verhalten. Dies kann beispielsweise mit dem Finit-Volumen Programm FLUENT berechnet werden. Zunächst werden die Abflußformen mit dem Modellierprogramm preBFC geometrisch abgebildet und als Netzwerk dargestellt (physical grid). Anschließend werden unter Einführung der entsprechenden Randbedingungen die Konstanten festgelegt. Am Einlauf wird die axiale Geschwindigkeit mit 600 ml/min vorgegeben. Am Auslauf wird lediglich vorgeschrieben, daß die Flüssigkeit hier herausfließt. Die sich einstellende Geschwindigkeit wird von FLUENT berechnet. Die Konstanten der Flüssigkeit sind die Standardeinstellungen von FLUENT, d.h. Wasser als Flüssigkeit :

Dichte: 1000 kg/m$^3$
Viskosität: 9.0 * 10$^{-4}$ kg/ms.

Bei der weiteren Auswertung ergibt sich für den Durchgang einer Grenzschicht, in der die Konzentration eines Analyten sich von 0 auf $c_0$ ändert, der in Abbildung 4 für die verschiedenen Varianten des Abschlußprofiles gezeigte Verlauf. Es bedeuten:

- □: rechteckiges Abschlußprofil entsprechend dem Stand der Technik
- ◊: paraboloides Abschlußprofil
- ▽: exponentiell gekrümmtes Abschlußprofil
- ○: sigmoidal gekrümmtes Abschlußprofil
- △: kegelförmiges Abschlußprofil

Bei der Berechnung wurde für alle Säulenendstücke das gleiche Volumen $V_0$ vorausgesetzt; eine weitere Voraussetzung ist, daß der Säuleninnenradius groß gegenüber dem Innenradius des Auslaufrohres ist. Diese Bedingung ist hinreichend erfüllt, wenn der Innenradius der Säule mindestens zehnmal größer ist als der Innenradius des Auslaufrohres; diese Bedingung ist mithin für präparative chromatographische Trennanlagen üblicherweise erfüllt.

Es ist offensichtlich, daß unter Verwendung eines Abschlußprofiles nach dem Stand der Technik die Grenzschicht erheblich verzerrt wird, woraus ein erheblich verringertes Trennvermögen resultiert. In den erfindungsgemäßen Anordnungen ist dieser Effekt deutlich verringert.

Die weitere erfindungsgemäße Ausgestaltung des Säulenendstückes (1) kann auf unterschiedliche Weisen technisch realisiert werden; diese Varianten sind dem Fachmann naheliegend. So ist es beispielsweise möglich, ein getrenntes Endstück vorzusehen, das mit dem Trennsäutenkörper (2) verbunden, beispielsweise verschraubt wird. Auch ist es möglich, daß das Endstück in die Trennsäule integriert wird und somit ein einheitliches Teil bildet. Weiterhin kann der Boden des Endstückes mit seinem gekrümmten Abschlußprofil integrierter Bestandteil des Endstückes sein. Es ist aber auch möglich, einen entsprechend geformten Einsatz in ein ein Säulenendstück mit rechteckigem Abschlußprofil einzubringen.

Erfindungsgemäß kann das Bodenteil leer sein, das heißt keine Einbauten aufweisen. Es können jedoch auch Einbauten, wie z.B. Stege, die die Fritte stützen, vorhanden sein. Das Bodenteil kann auch mit porösem Material gefüllt sein. Dieses Material kann zu einem Formkörper zusammengefügt, beispielsweise versintert oder verklebt sein.

Das Füllmaterial kann aber auch aus losen Partikeln bestehen. In einer Ausführungsform der Erfindung ist das Bodenteil mit demselben Sorbens gefüllt, wie es sich auch in der übrigen Säule befindet; in dieser Ausführungsform wird das Sorbensmaterial von einer im Auslaufrohr befindlichen Fritte gestützt.

Auch ohne weitere Ausführungen wird davon ausgegangen, daß ein Fachmann die obige Beschreibung nutzen kann. Die bevorzugten Ausführungsformen und Beispiele sind deswegen lediglich als beschreibende, keineswegs als limitierende Offenbarung aufzufassen.

**Patentansprüche**

1. Chromatographische Säule umfassend ein Sorbensbett und ein Säulenendstück, durch das Elutionsmittel strömt, das Säulenendstück umfassend ein Bodenteil (1, 1a, 1b), ein Ansatzstück für ein Ablaufrohr (4) und eine Fritte (2), wobei das Bodenteil eine im wesentlichen trichterförmige Kontur aufweist, **dadurch gekennzeichnet, dass** besagte Fritte (2) beim Durchströmen des Elutionsmittels einen Druckabfall pro Längeneinheit erzeugt, der mindestens doppelt so groß ist, wie der Druckabfall pro Längeneinheit, der in dem Sorbensbett beim Durchströmen des Elutionsmittels entsteht.

2. Chromatographische Säule nach Anspruch 1, **dadurch gekennzeichnet, dass** die Kontur des Säulenendstückes konkav gekrümmt ist.

3. Chromatographische Säule nach Anspruch 1, **dadurch gekennzeichnet, dass** die Kontur des Säulenendstückes konvex gekrümmt ist.

4. Chromatographische Säule nach Anspruch 1, **dadurch gekennzeichnet, dass** die Kontur des Säulenendstückes gekrümmt ist, und dass die Krümmung einen konkaven und einen konvexen Teil aufweist.

**Claims**

1. Chromatographic column comprising a sorbent bed and a column end piece through which eluent flows, the column end piece comprising a base part (1, 1a, 1b), an extension piece for a discharge tube (4) and a frit (2), where the base part has an essentially funnel-shaped contour, **characterised in that** the said frit (2) generates, on through-flow of the eluent, a pressure drop per length unit which is at least twice as great as the pressure drop per length unit which arises in the sorbent bed on through-flow of the eluent.

2. Chromatographic column according to Claim 1, **characterised in that** the contour of the column end piece is concavely curved.

3. Chromatographic column according to Claim 1, **characterised in that** the contour of the column end piece is convexly curved.

4. Chromatographic column according to Claim 1, **characterised in that** the contour of the column end piece is curved, and **in that** the curvature has a concave and a convex part.

**Revendications**

1. Colonne chromatographique comprenant un lit de sorbant et une pièce d'extrémité de colonne au travers de laquelle un éluant circule, la pièce d'extrémité de colonne comprenant une partie de base (1, 1a, 1b), une pièce d'extension pour un tube de décharge (4) et une fritte (2), dans laquelle la partie de base présente un contour essentiellement en forme d'entonnoir, **caractérisée en ce que** ladite fritte (2) génère, au niveau de la circulation de traversée de l'éluant, une chute de pression par unité de longueur qui est au moins deux fois supérieure à la chute de pression par unité de longueur qui se produit dans le lit de sorbant au niveau de la circulation de traversée de l'éluant.

2. Colonne chromatographique selon la revendication 1, **caractérisée en ce que** le contour de la pièce d'extrémité de colonne est incurvé de façon concave.

3. Colonne chromatographique selon la revendication 1, **caractérisée en ce que** le contour de la pièce d'extrémité de colonne est incurvé de façon convexe.

4. Colonne chromatographique selon la revendication 1, **caractérisée en ce que** le contour de la pièce d'extrémité de colonne est incurvé et **en ce que** la courbure présente une partie concave et une partie convexe.

**Fig. 1**

a)

(3)
(2)
(1)
(4)

b)

(3)
(2)
(1)
(4)

c)

(3)
(2)
(1)
(4)

**Fig. 2**

a)

b)

# Fig. 3

Fig. 4